# NEW EUROPEAN PATENT SPECIFICATION

(11) **EP 1 064 437 B2**
(45) Date of publication and mention of the opposition decision: **24.12.2008**
(45) Mention of the grant of the patent: 09.07.2003
(21) Application number: 99908779.4
(22) Date of filing: 19.03.1999
(51) Int. Cl.: E04B 1/78, E04C 2/16, D04H 1/70

(54) **PROCESS AND APPARATUS FOR PREPARATION OF A MINERAL FIBRE PRODUCT.**
VERFAHREN UND VORRICHTUNG ZUR HERSTELLUNG EINES MINERALFASERPRODUKTS.
PROCEDE ET APPAREIL DE PREPARATION D'UN PRODUIT EN FIBRES MINERALES.

(30) Priority: 19.03.1998 DK 38998
(43) Date of publication of application: 03.01.2001
(73) Proprietor: Rockwool International A/S, 2640 Hedehusene (DK)
(72) Inventor: CRIDLAND, Ian, DK-2720 Vanlose (DK); NORGAARD, Luis, DK-4000 Roskilde (DK); RASMUSSEN, Jeppe, DK-2830 Virum (DK)
(74) Representative: Sundien, Thomas
(86) International application number: PCT/DK1999/000151
(87) International publication number: WO 1999/047765

(56) References cited:
- EP-A- 0 374 112
- EP-A- 0 741 827
- WO-A1-88/00265
- WO-A1-92/10602
- WO-A1-97/01006
- WO-A1-97/36034
- WO-A1-98/12395
- US-A- 2 500 690
- US-A- 4 777 763

## Description

The present invention relates to a process for the preparation of a mineral fibre product comprising zones of different densities.

It is known in the art of manufacturing mineral fibre products to combine a number of individually produced and/or treated mineral fibre primary webs to obtain a secondary mineral fibre web and to manipulate such secondary web in order to provide various products.

US-A-4 950 355 discloses a method of and an apparatus for manufacturing a mineral fibre insulating web having a dense and rigid layer at one surface and/or a number of such layers. An uncured, non-woven mineral fibre web is treated with a binding agent and compacted with rollers and severed into at least two secondary webs, of which at least one is compressed beyond the initial compaction of the primary web. The two secondary mineral fibre webs are rejoined and cured to form a mineral fibre product having two layers of different density.

A similar method of providing a layered mineral fibre product is disclosed in CA-1 057 183, and WO 91/06407 discloses a method where a layered product is obtained from two individually produced primary mineral fibre webs.

For some applications it is desirable to compress such a secondary web comprising a number of zones having different properties in the longitudinal direction to obtain a longitudinally compressed tertiary web. In this way it is possible to effect the properties of the products obtainable from said tertiary web. Furthermore it is possible to obtain various products comprising a number of zones having different properties and which zones are shaped, i.e. curved or angled, rather than planar and superposed in a sandwich-like manner.

WO 97/01006 discloses a method of producing an annular insulation fibre covering, by which method a number of individual mineral fibre webs are superposed to obtain a sandwich-like secondary web which is subjected to the steps of moving the web in the longitudinal direction, folding said web transversally relative to the longitudinal direction by decellerating the web so as to obtain an unsupported longitudinally compressed web comprising undulations including two sets of undulation peaks extending in opposite directions relative to one another and relative to a plane of separation parallel with said longitudinal and transversal directions, separating the sets of undulation peaks along said plane separating each individual undulation peak so as to obtain a semi-annular insulation mineral fibre half-covering, and combining two such half-coverings into an annular insulation covering.

WO 97/36034 discloses an apparatus and a process for the production of mineral fibre products, where a secondary mineral fibre web comprising a number of primary web layers is compressed in the height direction as well as in the length direction in a compressing zone in order to induce either a more homogeneous web and/or a corrugation, where the web subsequently optionally is divided in the height direction and one of the divided off tertiary webs is compressed even further whereafter the webs are rejoined an cured together to form a two layer dual-density-product.

However, it has been found that the products obtained by the above mentioned methods employing longitudinal compression of laminated secondary webs have a tendency to delaminate, i.e. decompose into separate layers, during and/or after production. It is believed that this delamination effect is at least partly due to the tension induced in the product when severing the web into the tertiary web, i.e. by micro- and/or macroscopic bending, folding and/or longitudinal truncation of the web and its constituents. Unfortunately, it is for economical, technical and fire safety reasons generally undesirable to increase the optional amount of binding agent disposed between the layers constituting the web in order to increase adherence.

Furthermore it is a major downside of the prior art methods that the size of the various zones, i.e. the thickness of the layers, cannot be controlled completely. Due to the handling of the various webs during formation of the secondary web, only webs having a certain thickness and cohesiveness can be processed. Accordingly only products comprising zones having a certain size, i.e. layers having a certain thickness, are obtainable.

Accordingly it is an object of the present invention to provide an improved process for the production of mineral fibre products of the above mentioned type, and without impairing the further properties of the products in terms of ease and cost of production, handling and general functionality.

This is obtained by the process according to the invention comprising the steps of providing a primary mineral fibre web comprising a binding agent, compressing the primary web in at least one longitudinally extending zone so as to induce a sustained density increase in said zone, bringing the primary web to overlap itself by laying it out substantially transversal to the longitudinal direction of the primary web to form a secondary web comprising a number of layers having different densities, conveying the secondary mineral fibre web in the longitudinal direction, decelerating the longitudinal movement of the secondary web to obtain a longitudinally compressed tertiary web, cure or harden the binding agent in said tertiary web and cutting the product from the cured or hardened tertiary web.

By applying the process according to the invention it has proven possible to improve the delamination properties of the products significantly, i.e. it is now possible to substantially eliminate the delamination problem.

This is even obtainable using less binding agent compared to the process as applied hitherto in general. Hereby it is possible to obtain products in a more cost efficient and ecological manner and products suitable for use in a fire hazardous environment.

Furthermore it has proven possible to obtain products by the process according to the invention in which products the zone(s) having a relatively high density is thinner than compared to the prior art method.

Due to the transversal laying out of the primary web to obtain the secondary web, the longitudinally compressed zones of the primary web will form layers in the secondary web having a higher density relative to the web in general, said layers being parallel with the top/bottom surfaces of the web.

The laying out of the primary web can generally be performed in any manner capable of obtaining a secondary web having a number of layers corresponding to the number of compressed and uncompressed zones of the primary web. The laying out of the secondary web from the primary web is preferably performed by means of a pendulum distributer, e.g. as disclosed in WO 97/01006 or WO 88/03509.

It has furthermore been found that when the primary web is compressed in a number of longitudinally extending zones as disclosed, the general laying out by pendulum distributer is facilitated. It is believed that this is at least partly due to increased cohesiveness of the primary web caused by the compression. It has thus proven possible to increase production speed relative to the prior art method.

It is a great advantage of the process according to the invention that the apparatus for performing the process is quite simple compared to the prior art apparatuses. There is no need for separate stations for producing, separating and/or joining several webs in order to perform the process according to the invention and in order to obtain the desired products.

It is a further advantage of the process according to the invention that is possible to obtain various products having zones of different density placed anywhere in the product by simply compressing the appropriate part(s) of the primary web.

According to another preferred embodiment of the process according to the invention a longitudinally extending zone along each of the two edges of the primary web is compressed. Hereby the compressed zones will constitute dense layer at the top and bottom surfaces of the secondary web with a softer layer in between, and it is thus possible to obtain products having a dense outer layer and a softer core from the tertiary web.

Alternatively the primary web can be compressed along one of the edges. Hereby products having a dense surface layer on one side is obtainable.

Generally the primary web can be compressed depending on the desired configuration of the obtained product.

According to the inventive process it is even possible to switch between a number of different products produced online by simply altering the position and/or number of zones compressed. This can be performed in an easy manner by displacing and/or altering the compression means used to compress the primary web. This is a great advantage over the prior art method employing a number of discrete webs, where the number and/or order of said webs would have to be rearranged.

When compressing the primary web it is desirable that the web comprises an amount of compression aid. Dry newly formed fibres tend to resemble very frosty snow, in the way that it is very hard to keep in compressed state. By means of an compression aid it is possible to maintain a large proportion of the density increase induced in the primary web during the compression.

Surprisingly it has been found that liquids have the ability to make the fibres act in a melting snow-like fashion, facilitating the maintenance of the applied compression, by keeping the individual fibres together. The compression aid is thus preferably substantially in the form of a liquid, which is added to the compression zones of the primary web before, during and/or shortly after the compression force is applied.

It is an advantage of using a compression aid that it enables an increased density-ratio between layers constituted by compressed zones and layers constituted by zones not having been compressed.

It is a further advantage of the present invention that due to the improved properties of the high density layer of the insulating boards produced by present method the high density layers may be produced thinner using less mineral fibres and thus enabling that the average density of the mineral fibre product can be lowered. Accordingly both cost of production and transport may be reduced.

It is a yet further great advantage of the present invention, that the necessary amount of ordinary binding agent normally supplied to the primary web in order to improve hardness of the high density layer may be even further reduced, thus reducing cost and improving fire protection ability.

The amount of such liquid necessary to obtain the desired effect depends on the nature of the liquid in question. The practical lower limit is determined by the minimum amount where an actual effect can be noticed, and the upper limit is more or less determined by whether and/or to which extent compression aid is to be removed at a later stage. However, in practice it is generally preferred to use an amount of 0.1-10 weight-% liquid compression aid, more preferably 0.5-5 weight-% compression aid, as measured relative to the uncured web.

Applicable substantially liquid compression aids comprises most organic and inorganic based liquids, comprising e.g. oils (organic as well as preferably silicon-based oil), water, surfactants, suspensions or solutions comprising dye or one or more coloring agents, suspensions of binding agents (e.g. phenol formaldehyde resin or melamine resin), colloidal suspensions and/or the like, or any mixture thereof.

Surprisingly water has proven to be very suitable for the purpose of compression aid, and is therefore for economical and environmental reasons a particularly preferred liquid compression aid.

Water, in terms of compression aid, is preferably added in an amount of about 0.2-2 weight-%, or added in an amount so that the total amount of water in the compression zones is about 0.8-3 weight-%.

In another preferred embodiment of the method according to the invention an oil is used as compression aid. Applicable oils comprise any oil capable of keeping the fibers together, i.e. maintaining the compression effect. For reasons of fire-safety the used oil is preferably silicon-based.

The oil is preferably added to the compression zone of the primary web in a total amount of about 0.2-2 weight-percent. However, the entire primary web may for other reasons comprise an amount of oil in which case, the oil added to the compression zone is preferably added in an amount corresponding to about 0.4-1 weight-percent-points more than the average amount of oil in the zones of the primary web not to be compressed.

In order to provide an essentially dry product, the excess part of the applied liquid compression aid may be removed from the product or transformed immediately before, during and/or at any time after the curing of the product. Depending on the nature of the compression aid, it may be e.g. evaporated, combusted, hardened or cured.

Apart from the substantially liquid compression aids, substantially non-liquid compression aids may be applied. Such substantially non-liquid compression aids may comprise adhesives, derivatives of cellulose or acrylates, water-soluble polymers, thermoplastic polymers, surfactants, colloidal substances, diatomite, gels (e.g. silicagel or water glass), dye or coloring agents, clays or mixtures thereof. The here-mentioned substances may also be applied in combination with one or more substantially liquid substances, e.g. in the form of one of the above mentioned substantially liquid substances.

Apart from the compression aids further additives capable of improving the various properties of the mineral fibre product obtainable by the process according to the invention in respect of various specific uses can be added.

It is an advantage of the above mentioned essentially non-liquid compression aids, that in most cases no special action has to be taken in order to remove a carrier agent or the compression aid itself neither during nor after the curing of the product.

Generally the zones of the primary web to be compressed can be compressed in any amount capable of inducing a sustainable density increase in said zone. However, the compression of the primary web is preferably carried out in an amount corresponding to compressing the zones using rollers operating at a pressure of around from 2.5 kN per meter roller width to 30 kN per meter roller width.

It has been found that particularly advantageous products can be obtained by compressing the primary web in an amount of about 5-20 kN/m, more preferably about 7.5-15 kN/m.

Compressing the primary web in an amount of less than about 1.5 kN/m has no significant impact on the final products.

The compression of the primary web may be performed using any known means of compression, e.g. rollers, continuous bands, pistons or the like. The surface of the compression means may be smooth or curved or having a pattern. Furthermore the applied pressure may be constant or varied over time and/or the compression zone.

Preferably rollers are used for applying a constant and uniform pressure to the entire compression zone. Preferably a number of rollers are used each having separate suspension. By applying a number of individually suspended compression means, it is possible to control the compression force applied by each of the means separately and thus also possible to swiftly switch between configurations of compressed zones.

According to a preferred embodiment of the process according to the invention it has proven advantageous to use rollers or wheels being somewhat resilient. Preferred rollers comprise a flexible suspension and/or a rubber coating, e.g. as a sort of tyres. In this way the rollers are able to compensate for unevenness of the primary web.

Furthermore, by using rollers having such a resilient surface or suspension, it is possible to reduce the damage induced on the primary web by the compression in terms of fewer damaged or broken fibres.

However, it has proven particularly advantageous to use rollers having a smooth non-sticky pressure applying surface of e.g. metal or polytetrafluoruethylene. Hereby it is obtained that the primary web does not stick to the rollers, which might otherwise become a severe problem during the compression step.

It is a further advantage of the process according to the invention that it requires only a small change of the existing mineral fibre production apparatuses, in terms of e.g. placement of one or more compression rollers pressing against the primary web on the forming wire, to enable the production of mineral fibre products having the desired properties.

The compression process according to the invention may be repeated any number of times. By applying more than one compression step it is possible to use a lower compression ratio compared to when only one compression step is applied, thus reducing the stress implied on the web during the compression and thereby decreasing the number of broken and/or damaged fibres.

When applying more than one compression step, the compression ratio of each step may either be the same or vary, e.g. in terms of gradually lowering or raising the compression ratio successively.

According to a preferred alternative embodiment of the process according to the invention the primary well is compressed in at least one longitudinally extending zone in such a manner that the applied pressure increases substantially continuously in the transversal direction of the zone so as to induce a compression gradient in said direction. By this method it is possible to obtain products having one or more continuous density gradients.

According to a particularly preferred embodiment of the process according to the invention the length compression is performed by corrugating the secondary mineral fibre web to obtain a tertiary mineral fibre web comprising undulations extending in the transversal direction of the tertiary web and having each a set of undulation peaks extending in opposite directions relative to one another and perpendicularly to a separation plane extending.in the longitudinal and transversal direction at the centre of the tertiary web.

By applying said steps it is possible to obtain products comprising a number of zones having different densities and in which products said zones are shaped or curved rather than just planar and superposed. It is a great advantage of the process according to the invention that these advantageous products are now available without risk of delamination.

The process according to the invention has proven particularly advantageous for obtaining pipe sections.

Pipe sections can easily be produced by separating the undulated tertiary web along the separation plane to obtain two sets of opposite undulation peaks and cutting half-parts of pipe sections from a set of undulation peaks, in terms of obtaining sets of semi-annular parts, e.g. as disclosed in WO 97/01006. Complete pipe sections can subsequently be produced by combining two half-parts.

The primary web can be compressed in a zone along one of the edges. Hereby each set of the undulations comprise an undulation peak having a dense core and a corresponding opposite undulation peak having a dense outer surface. Accordingly e.g. pipe sections are obtainable having either a dense outer surface layer or a dense inner surface layer.

It has proven advantageous to obtain mineral fibre pipe sections comprising a dense layer at the outer surface. This renders the pipe section more weather resistant and provides the possibility of applying paint or the like directly on the surface of the pipe section.

It has furthermore proven advantageous to obtain mineral fibre pipe sections comprising a dense layer at the inner surface. By having a relatively dense layer directly neighboring the pipe to be covered by the pipe section it has surprisingly proven possible to increase the insulating properties relative to when employing ordinary pipe sections.

Furthermore it is generally a problem that the most widely used binding agents decompose if brought in contact with very hot items such as hot pipes. When the binding agent is gone the dimensional stability of the pipe section is lost. This is particularly a problem if the surface temperature of the item to be insulated is above around 250 °C.

However, the pipe sections obtainable by the process according to the invention having a dense inner surface layer have proven to be particularly dimensional stable relative to the similar prior art products. Accordingly it is highly advantageous to use such pipe sections having dense inner surface layers according to the invention to insulate items having a high surface temperature, and particularly items having a temperature above around 250 °C.

According to yet another preferred embodiment of the process according to the invention a zone along both edges of the primary web, thus making products having all the above advantageous properties available in an easy and efficient manner.

Pipe sections are obtainable by the process according to the invention, which may be used in particular for insulating pipes having a surface temperature above around 250 °C.

A further way of treating the corrugated web, is to corrugate the secondary web as mentioned above and to force the corrugations of the thus longitudinally compressed tertiary web into more or less square formations by flattening the corrugation peaks.

Hereby it is possible to obtain box-formed products in which the respective mineral fibre layers within the product are bent more or less 90° at two places, and thus it is possible to obtain products having a high density layer situated at three surfaces of the six surfaces of such a box-shaped product from a secondary web comprising a high density layer a one side. The product will thus have the high density layer at the surface corresponding to the corrugation peak and at two side surfaces substantially perpendicular to the flattened corrugation peak, said two side surfaces being mutually substantially parallel.

Such a product, obtainable by the process according to the invention is particularly suitable for use as a plant growth medium, and is preferably in the form of a cubus or box-shaped block.

A plant can be placed at the flattened corrugation peak extending its roots downwards into the block. Because of the increased density of the top layer the plant is fixated thoroughly in the block. Furthermore the high density layer will due to capillary effect facilitate the distribution and uptake of water of the block.

A great advantage of such a plant growth medium is that the two hard side surfaces prevent the plant from extending the roots in the directions of said sides and thus solves a common problem in the art of culturing plants, namely that the block for culturing plants either must be wrapped in a non-penetratable foil or the like or placed in a spaced manner in order to prevent the roots of a plant placed in one block to grow into another block.

The plant growth medium can of course be produced having any combinations of high and low density layers as well as preferably density gradients.

Even though it is preferable that the plant growth medium is more or less box-shaped it can also be semi cylindrical, cylindrical or the like. The above mentioned advantages also applies to such products.

According to another particularly preferred embodiment of the process according to the invention the length compression is performed as a length/height compression (LHC).

By length/height compression is meant a longitudinal compression of the secondary web by which the height of the obtained tertiary web is substantially the same or less than the height of the compressed secondary web. Accordingly the longitudinal compression is performed while at the same time maintaining the height of the secondary web or by even at the same time decreasing the height of the web.

In a more or less conventionally produced mineral fibre primary and secondary web, the fibres are predominantly oriented in planes more parallel with than perpendicular to the forming wire on which the web was formed, i.e. with to top/bottom surfaces of the web.

When longitudinally compressing a conventionally produced mineral fibre secondary web, in which the mineral fibres are dominantly oriented in planes parallel to the surfaces of the web, the fibres are at least partly rearranged so that they after the longitudinal compression in a significantly higher number extends in planes perpendicular to the top/bottom surface planes of the web.

This result in a significantly greater stiffness and strength in the direction of height of the tertiary web, and accordingly of corresponding direction of the obtainable products, thus also indicated by e.g. a lower degree of self deflection of the products.

It is a great advantage of the process according to the invention that these advantageous products are now obtainable without the risk of delamination even if the secondary web comprises more than 2 layers having different densities.

It has been found that particularly advantageous products can be obtained when longitudinally compressing the secondary web by a ratio ranging from 1.3:1 to 5:1 and especially a ratio ranging from 1.5:1 to 2.5:1.

The longitudinal compression may be performed by a method known per se, e.g. as disclosed in CH patent no. 620.861, according to which a mineral fibre web successively is conveyed between at least two pairs of cooperating conveyor belts, and where the first pair of conveyor belts is conveying the fibre web by a speed greater than the second pair.

The longitudinal compression may also be performed by using two or more pairs of rollers, where the conveying speed of the roller pairs is reduced in the direction of movement, cf. US patent no. 2.500.690.

A further improvement of the properties of the mineral fibre products obtainable by the process according to the invention may be obtained by subjecting the secondary mineral fibre web to a height compression during the longitudinal compression and or by subjecting the longitudinally compressed tertiary mineral fibre web to a height compression after the longitudinal compression, but before the curing. The height compression is preferably performed by a ratio up till 2, and even more preferably a ratio of 1 to 1.3.

As the products obtainable by the process according to the invention are provided with one or more hard and stiff high density layers, which layers are particularly capable of distributing a point shaped compression force applied perpendicular to the layers over a larger area, they are more capable of resisting such compression. The products according to the invention generally have a higher point strength, i.e. capability to resist a point shaped load without being damaged, than comparable prior art products.

This is i.a. highly advantageous when the products obtainable by the process according to the invention are used for insulating roofs or as foundation for floor constructions because the products are not damaged when walked on.

The process according to the invention can generally operate on a primary web having a surface weight in the range from 200 to 1000 g/m². However, the typical primary web for the products obtainable by the process according to the invention has a first average thickness of about 3-7 cm and preferably around 4-6 cm, and has a density of about 8-17 kg/m³ and preferably about 10-15 kg/m³ (about 400-600 g/m² surface weight, preferably around 450-550 g/m²).

It is furthermore believed that the type and amount of binding agent used has an impact on the properties of the mineral fibre products.

According to another preferred embodiment of the process according to the invention an amount of binding agent of 0.5-15 weight-%, preferably 0.5-10 weight-% and more preferably 0.5-5 weight-% is added to the primary web, as measured in the final product. It is even possible to obtain the highly advantageous products using as little binder as around 0.5-2 weight-%.

The binding agent is preferably added as an aqueous suspension of e.g. phenol formaldehyde urea, acrylic-copolymer, resorsinole, furan or melamine resin. It is preferable to add the binding agent before the compression of the primary web.

Furthermore it has been found that binders of the above type are very well suited for the purpose of obtaining mineral fibre boards having the desired properties.

The term primary mineral fibre web as used herein designates a newly formed mineral fibre web of a typical height (thickness) of 3-7 cm. which is meant for being sandwiched with a number of corresponding primary web layers, preferably constituted by the same primary web in order to obtain a secondary web. A particularly preferred way of obtaining such primary and secondary mineral fibre webs per se is disclosed in WO 97/01006.

The term mineral fibre as used herein comprises all types of man-made mineral fibres, such as rock, glass or slag fibres, in particular fibres used in materials for the above purposes, and as filler in cement, plastics or other substances, or which are used as culture medium for plants.

The term rock fibre as used herein designates fibres having a composition comprising generally around 34-62 % and preferably around 41-53 weight-% SiO₂, generally around 0.5-25 weight-% and preferably around 5-21 weight-% Al₂O₃, optionally around 0.5-15 weight-% and preferably around 2-9 weight-% total iron oxides, generally around 8-35 weight-% and preferably around 10-25 weight-% CaO, generally around 2.5-17 weight-% and preferably around 3-16 weight-% MgO, optionally around 0.05-1 weight-% and preferably around 0.06-0.6 weight-% MnO, generally around 0.4-2.5 weight-% and preferably around 0.5-2 weight-% K₂O, and further comprising Na₂O in an amount of less than around 5 weight-%, preferably less than around 4 weight-% and more preferably between around 1 and 3.5 weight-%, TiO₂ in an amount of more than around 0.2-2 weight-%. Preferably rock fibres does not comprise BaO or Li₂O in any significant amount and the content of B₂O₃ is preferably less than 2%. Rock fibres typically have a glass transition temperature (Tg) above 700 °C, preferably above 730 °C and more preferably between around 760 and 870 °C. The density of rock fibres are typically above around 2.6 g/cm³ and preferably between around 2.7 and 3 g/cm³. The refractive index of rock fibres are typically above around 1.55 and preferably between around 1.6 and 1.8.

The term binding agent as used herein comprises any material which is suited as binding agent in mineral fibre materials for the above products, e.g. organic binders such as phenol formaldehyde urea, acrylic-copolymer, resorsinole, furan or melamine resin and/or inorganic binders such as aluminum phosphates or silicon containing binders such as silica sol or water glass. Such binding agents are preferably supplied to the mineral fibre material in the form of aqueous suspensions.

The term rollers as used herein comprises both rollers, wheels and bands acting substantially as rollers. The rollers may be solid, perforated or hollow, having tyres, and/or any straight, curved or patterned pressure-applying surfaces.

The invention further relates to an apparatus comprising means for carrying out the steps of the process according to the invention.

Accordingly the invention relates to an apparatus as defined in claim 8.

A preferred embodiment of the apparatus according to invention further comprises means for corrugating the secondary mineral fibre web to obtain a tertiary mineral fibre web comprising undulations extending in the transversal direction of the tertiary web and having each a set of undulation peaks extending in opposite directions relative to one another and perpendicularly to a separation plane extending in the longitudinal and transversal direction at the centre of the tertiary web.

An even further preferred embodiment of the apparatus according furthermore means for severing the tertiary web into substantially square undulations.

A particularly preferred embodiment of the apparatus according to the invention also comprises means for separating the tertiary web along the separation plane to obtain two sets of opposite undulation peaks and cutting the product from a set of undulation peaks.

In the following the invention will be described in more detail by way of illustrations.

Fig. 1 Shows a way of making square corrugation peaks.

Fig. 2 Shows how square corrugation peak can be separated.

Fig. 3 Show a product cut form a separated square corrugation peak.

Fig. 4 Illustrates a particularly preferred process for the compression of the primary web and the formation of the secondary web.

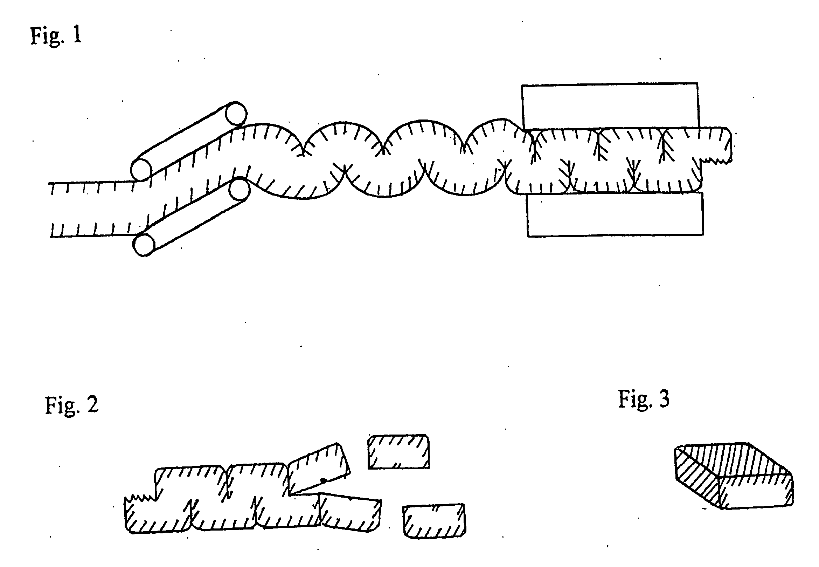

As can be seen from figure 1 the square corrugation peask can be formed by forcing the corrugated web into a fixed-sized gap.

The sguare corrugation peaks can otherwise be treated as disclosed in WO 97/01006 and separated as illustrated in figure 2.

Figure 3 illustrates a product cut from a square undulation peak and having a dense layer at 3 surfaces as well as a low density core. Such a product is particularly suitable as plant growth medium.

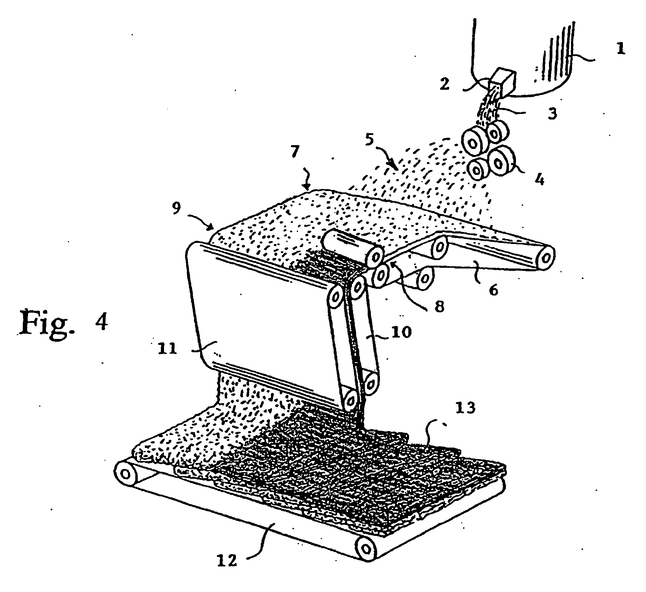

In Fig. 4, the steps of producing the secondary web from which the products eventually are cut is illustrated. The first step involves the formation of mineral fibres from a mineral fibre forming melt which is produced in a furnace 1 and which is supplied from a spout 2 of the furnace 1 to a total of four rapidly rotating spinning-wheels 3 to which the mineral fibre forming melt is supplied as a mineral fibre forming melt stream 4. As the mineral fibre forming melt stream 4 is supplied to the spinning-wheels 3 in a radial direction relative thereto, a gas stream is simultaneously supplied to the rapidly rotating spinning-wheels 3 in the axial direction thereof causing the formation of individual mineral fibres or bunches or tufts of mineral fibres which are expelled or sprayed from the rapidly rotating spinning-wheels 3 as indicated by the reference numeral 5. The gas stream may constitute a so-called temperature treatment gas stream, normally a cooling gas stream. The mineral fibre spray 5 is collected on a continuously operated first conveyer belt 6 forming the primary mineral fibre web 7. A heat-curable bonding agent is also optionally added to the primary mineral fibre web 7 either directly to the primary mineral fibre web 7 or at the stage of expelling the mineral fibres from the spinning-wheels 3, i.e. at the stage of forming the individual mineral fibres. The binder can of course be any known binder for use in combination with mineral fibres, i.e. also a thermoplastic binder. The first conveyer belt 6 is, as is evident from Fig. 4, composed of two conveyer belt sections. A first conveyer belt section which is sloping relative to the horizontal direction and relative to a second substantially horizontal conveyer belt section. The first section constitutes a collector section, whereas the second section constitutes a transport section. This can of course be made in any other way known in the art. The conveyer belt(s) used for collecting the fibres are preferably foraminous and provided with means (not shown) for the suction of air through the belts to facilitate the layering of the fibres. This increases the homogeneity of the primary web 7 even further by ensuring a better distribution of the fibres, i.e. in terms of spots with low fibre density having the highest airflow through the belt which then leads to layering of more fibres there, etc.

The compression of the primary web 7 is performed by roller 8 extending only partially in the width-direction of the primary web and in such a way that the primary web 9 after the partial compression maintains a substantial amount of the compression induced in a longitudinally extending track along one side. The length and number of rollers can of course be adjusted to provide any desired size and number of compressed zones. Various known means, e.g. in terms of compression aids or the like can advantageously be employed to ensure the density increase is maintained/obtained in the final product.

The first section of the first conveyer belt 6 constitutes as stated above a collector section, whereas the second section of the conveyer belt 6 constitutes a transport section by means of which the primary mineral fibre web having the continuous compression gradient in the width direction is transfer red to a second and a third continuously operated conveyer belt designated the reference numeral 10 and 11, respectively, which are operated in synchronism with the first conveyer belt 6 sandwiching the compressed primary mineral fibre web 9 between two adjacent surfaces of the second and third conveyer belts 10 and 11, respectively.

The second and third conveyer belts 10 and 11, respectively, communicate with a fourth conveyer belt 12 which constitutes a collector conveyer belt on which a secondary mineral fibre web 13 is collected as the second and third conveyer belts 10 and 11, respectively, are swung across the upper surface of the fourth conveyer belt 12 in the transversal direction relative to the fourth conveyer belt 12. The secondary mineral fibre web 13 is consequently produced by arranging the primary mineral fibre web 9 in overlapping relation generally in the transversal direction of the fourth conveyer belt 12.

By producing the secondary mineral fibre web 13 from the partially compressed primary mineral fibre web 9 as disclosed in Fig. 4, a secondary web is produced which comprises a hard high density layer at the top and a softer low density layer at the bottom. By compressing a track along each side of the primary layer a secondary web comprising a hard layer on each side and a soft layer at the center is produced.

In the following the invention will be described in more detail by way of an example.

The present example relates to a product corresponding to the product illustrated by figur 3.

A mineral fibre primary web having a area weight of 400 g/m² and being 1.8 m wide is formed on a forming wire. The primary web is compressed in a 30-35 cm wide longitudinally extending zone along both edges. The primary web is made to overlap itself by means of a pendulum distributer forming a secondary web comprising around 12 layers of primary web. The secondary web is longitudinally compressed in a amount of 1.5:1 by forming a tertiary web comprising undulations. The 140 mm high tertiary web is severed into square formations having a half period length of around 120 mm by height compressing the web to a final height of 120 mm and the web is cured. The cured tertiary web is divided into two sets of square undulation peaks by cutting it horizontally at the center plane separating said sets. From each undulation peak blocks having a side lengths of 120 mm and a height of 6 mm are cut. The average density of the blocks is 60 kg/m³. Each block comprises a 6 mm hard outer surface layer of 135 kg/m³ at the top surface and at 2 side surfaces as well as a soft inner zone of 45 kg/m³.

## Claims

1. A process for the preparation of a mineral fibre product comprising the steps of:
- providing a primary mineral fibre web (7) comprising a binding agent,
- compressing the primary web (7) in a longitudinally extending zone along one or both edges of the primary web (7) so as to induce a sustained density increase in said zone(s),
- bringing the primary web (7) to overlap itself by laying it out substantially transversal to the longitudinal direction of the primary web (13) to form a secondary web comprising a number of layers,
- conveying the secondary mineral fibre web (3) in the longitudinal direction,
**characterized in**
- decelerating the longitudinal movement of the secondary web (13) to obtain a longitudinally compressed tertiary web,
- cure or harden the binding agent in said tertiary web,
- cutting the cured or hardened tertiary web,
wherein the compressing step of the primary web (7) in said longitudinally extending zone along one or both edges of the primary web (7) is such that a web presenting zones with different densities is obtained, so that the layers of the secondary web (3) therefore also have different densities.

2. Process according to claim 1 wherein the longitudinal compression is performed by corrugating the secondary mineral fibre web to obtain a tertiary mineral fibre web comprising undulations extending in the transversal direction of the tertiary web and having each a set of undulation peaks extending in opposite directions relative to one another and perpendicularly to a separation plane extending in the longitudinal and transversal direction at the centre of the tertiary web.

3. Process according to claim 2 further comprising the steps of severing the tertiary web into substantially square undulations.

4. Process according to claim 2 or 3 further comprising the steps of separating the tertiary web along said separation plane to obtain two sets of opposite undulation peaks and cutting the product from a set of undulation peaks.

5. A process according to claim 1 **characterized in that** the longitudinal compression is performed as a length/height compression.

6. A process according to claim 5 **characterized in that** longitudinal compression is performed at a ratio of 1.3:1 to 5:1.

7. A process according to claim 5 or 6 **characterized in that** tertiary web is compressed in the height direction in an amount of from 1:1 to 2:1.

8. An apparatus for the preparation of a mineral fibre product comprising:
- means for providing a primary mineral fibre web (7) comprising a binding agent,
- means (8) for compressing the primary web (7) in a longitudinally extending zone exclusively along one edge not compressing the remaining primary web or in longitudinally extending zones exclusively along both edges of the primary web (7) not compressing a zone between said edges so as to induce a sustained density increase in said zone(s),
- means (10,11) for bringing the primary web (7) to overlap itself by laying it out substantially transversal to the longitudinal direction of the primary web (7) to form a secondary web (13) comprising a number of layers,
- means (12) for conveying the secondary mineral fibre web in the longitudinal direction,
**characterized in**
- means for decelerating the longitudinal movement of the secondary web to obtain a longitudinally compressed tertiary web,
- means for curing or hardening the binding agent in said tertiary web,
- means for cutting the cured or hardened tertiary web,
wherein the means for compressing the primary web (7) in a longitudinally extending zone along one or both edges of the primary web (7) are such that they induce a sustained density increase in said zone.

9. An apparatus according to claim 8 comprising means for corrugating the secondary mineral fibre web to obtain a tertiary mineral fibre web comprising undulations extending in the transversal direction of the tertiary web and having each a set of undulation peaks extending in opposite directions relative to one another and perpendicularly to a separation plane extending in the longitudinal and transversal direction at the centre of the tertiary web.

10. An apparatus according to claim 8 or 9 comprising means for severing the tertiary web into substantially square undulations.

11. An apparatus according to claim 8-10 comprising means for separating the tertiary web along the separation plane to obtain two sets of opposite undulation peaks and cutting the product from a set of undulation peaks.

## Patentansprüche

1. Verfahren zur Herstellung eines Mineralfaserprodukts, umfassend die Schritte:
- Bereitstellen einer primären Mineralfaserbahn (7), die ein Bindemittel umfasst,
- Komprimieren der primären Bahn (7) in einer sich in Längsrichtung erstreckenden Zone entlang einer oder beiden Kanten der primären Bahn (7), um eine anhaltende Dichtezunahme in der bzw. den Zonen herbeizuführen,
- Bewirken, dass sich die primäre Bahn (7) selbst überlappt, indem sie im Wesentlichen quer zur Längsrichtung der primären Bahn (7) ausgelegt wird, um eine sekundäre Bahn zu bilden, die eine Anzahl von Schichten umfasst,
- Fördern der sekundären Mineralfaserbahn (13) in der Längsrichtung,
**gekennzeichnet durch**
- Verlangsamen der Längsbewegung der sekundären Bahn (13), um eine in Längsrichtung komprimierte tertiäre Bahn zu erhalten,
- Aushärten oder Härten des Bindemittels in der tertiären Bahn,
- Zuschneiden der ausgehärteten oder gehärteten tertiären Bahn,
wobei der Komprimierungsschritt der primären Bahn (7) in der sich in Längsrichtung erstreckenden Zone entlang einer oder beiden Kanten der primären Bahn (7) so ausfällt, dass eine Bahn, welche Zonen mit verschiedenen Dichten aufweist, erhalten wird, so dass die Schichten der sekundären Bahn (13) deswegen ebenfalls verschiedene Dichten aufweisen.

2. Verfahren nach Anspruch 1, wobei die Längskompression durchgeführt wird durch Wellen der sekundären Mineralfaserbahn, um eine tertiäre Mineralfaserbahn mit Wellungen zu erhalten, die sich in der Querrichtung der tertiären Bahn erstrecken und jeweils eine Gruppe von Wellungsgipfeln aufweisen, die sich in entgegengesetzte Richtungen in Bezug zueinander und senkrecht zu einer Trennungsebene erstrecken, die in der Längs- und Querrichtung in der Mitte der tertiären Bahn verläuft.

3. Verfahren nach Anspruch 2, weiterhin umfassend die Schritte des Teilens der tertiären Bahn in im Wesentlichen quadratische Wellungen.

4. Verfahren nach Anspruch 2 oder 3, weiterhin umfassend die Schritte des Trennens der tertiären Bahn entlang der Trennungsebene, um zwei Gruppen gegenüberliegender Wellungsgipfel zu erhalten, und des Schneidens des Produkts aus einer Gruppe von Wellungsgipfeln.

5. Verfahren nach Anspruch 1, **dadurch gekennzeichnet, dass** die Längskompression als Längen-/Höhenkompression durchgeführt wird.

6. Verfahren nach Anspruch 5, **dadurch gekennzeichnet, dass** Längskompression mit einem Verhältnis von 1,3:1 bis 5:1 durchgeführt wird.

7. Verfahren nach Anspruch 5 oder 6, **dadurch gekennzeichnet, dass** die tertiäre Bahn in der Höhenrichtung in einem Maß von 1:1 bis 2:1 komprimiert wird.

8. Vorrichtung zur Herstellung eines Mineralfaserprodukts, umfassend:
- Mittel zum Bereitstellen einer primären Mineralfaserbahn (7), die ein Bindemittel umfasst,
- Mittel (8) zum Komprimieren der primären Bahn (7) in einer sich in Längsrichtung erstreckenden Zone, ausschließlich entlang einer Kante, ohne Komprimieren der übrigen primären Bahn, oder in sich in Längsrichtung erstreckenden Zonen, ausschließlich entlang beiden Kanten der primären Bahn (7), ohne Komprimieren einer Zone zwischen den Kanten, um eine anhaltende Dichtezunahme in der bzw. den Zonen herbeizuführen,
- Mittel (10, 11), die bewirken, dass sich die primäre Bahn (7) selbst überlappt, indem sie im Wesentlichen quer zur Längsrichtung der primären Bahn (7) ausgelegt wird, um eine sekundäre Bahn (13) mit einer Anzahl von Schichten zu bilden,
- Mittel (12) zum Fördern der sekundären Mineralfaserbahn in der Längsrichtung,
**gekennzeichnet durch**
- Mittel zum Verlangsamen der Längsbewegung der sekundären Bahn, um eine in Längsrichtung komprimierte tertiäre Bahn zu erhalten,
- Mittel zum Aushärten oder Härten des Bindemittels in der tertiären Bahn,
- Mittel zum Schneiden der ausgehärteten oder gehärteten tertiären Bahn,
wobei die Mittel zum Komprimieren der primären Bahn (7) in einer sich in Längsrichtung erstreckenden Zone entlang einer oder beiden Kanten der primären Bahn (7) so ausfallen, dass sie eine nachhaltige Dichtezunahme in der Zone herbeiführen.

9. Vorrichtung nach Anspruch 8, umfassend Mittel zum Wellen der sekundären Mineralfaserbahn, um eine tertiäre Mineralfaserbahn mit Wellungen zu erhalten, die sich in der Querrichtung der tertiären Bahn erstrecken und jeweils eine Gruppe von Wellungsgipfeln aufweisen, die sich in entgegengesetzten Richtungen in Bezug zueinander und senkrecht zu einer Trennungsebene erstrecken, die in der Längs- und Querrichtung in der Mitte der tertiären Bahn verläuft.

10. Vorrichtung nach Anspruch 8 oder 9, umfassend Mittel zum Teilen der tertiären Bahn in im Wesentlichen quadratische Wellungen.

11. Vorrichtung nach Anspruch 8-10, umfassend Mittel zum Trennen der tertiären Bahn entlang der Trennungsebene, um zwei Gruppen gegenüberliegender Wellungsgipfel zu erhalten, und zum Schneiden des Produkts aus einer Gruppe von Wellungsgipfeln.

## Revendications

1. Procédé de préparation d'un produit de fibre minérale comprenant les étapes consistant à :
- fournir une bande de fibre minérale primaire (7) comprenant un agent de liaison,
- comprimer la bande primaire (7) dans une zone s'étendant longitudinalement le long de l'un ou des deux bords de la bande primaire (7) de sorte à induire une augmentation de densité soutenue dans ladite (lesdites) zone(s),
- amener la bande primaire (7) à se chevaucher en la disposant de manière sensiblement transversale à la direction longitudinale de la bande primaire (13) pour former une bande secondaire comprenant un certain nombre de couches,
- acheminer la bande de fibre minérale secondaire (3) dans la direction longitudinale,
**caractérisé en ce qu'**il comprend les étapes consistant à :
- décélérer le mouvement longitudinal de la bande secondaire (13) pour obtenir une bande tertiaire longitudinalement comprimée,
- traiter ou durcir l'agent de liaison dans ladite bande tertiaire,
- couper la bande tertiaire traitée ou durcie,
dans lequel l'étape de compression de la bande primaire (7) dans ladite zone s'étendant longitudinalement le long de l'un ou des deux bords de la bande primaire (7) est telle qu'une bande présentant des zones ayant différentes densités est obtenue, de sorte que les couches de la bande secondaire (3) ont ainsi également différentes densités.

2. Procédé selon la revendication 1, dans lequel la compression longitudinale est effectuée en ondulant la bande de fibre minérale secondaire pour obtenir une bande de fibre minérale tertiaire comprenant des ondulations s'étendant dans la direction transversale de la bande tertiaire et ayant chacune un ensemble de pics d'ondulation s'étendant dans des directions opposées les uns par rapport aux autres et perpendiculairement à un plan de séparation s'étendant dans la direction longitudinale et la direction transversale au centre de la bande tertiaire.

3. Procédé selon la revendication 2, comprenant en outre l'étape de division de la bande tertiaire en des ondulations sensiblement carrées.

4. Procédé selon la revendication 2 ou 3, comprenant en outre les étapes de séparation de la bande tertiaire le long dudit plan de séparation pour obtenir deux ensembles de pics d'ondulation opposés et de découpe du produit à partir d'un ensemble de pics d'ondulation.

5. Procédé selon la revendication 1, **caractérisé en ce que** la compression longitudinale est effectuée sous la forme d'une compression de longueur/hauteur.

6. Procédé selon la revendication 5, **caractérisé en ce que** la compression longitudinale est effectuée à un rapport de 1,3 : 1 à 5 : 1.

7. Procédé selon la revendication 5 ou 6, **caractérisé en ce que** la bande tertiaire est comprimée dans la direction de hauteur en une quantité de 1 : 1 à 2 : 1.

8. Appareil pour la préparation d'un produit de fibre minérale comprenant :
- un moyen pour fournir une bande de fibre minérale primaire (7) comprenant un agent de liaison,
- un moyen (8) pour comprimer la bande primaire (7) dans une zone s'étendant longitudinalement exclusivement le long d'un bord ne comprimant pas la bande primaire restante ou de zone s'étendant longitudinalement exclusivement le long des deux bords de la bande primaire (7) ne comprimant pas une zone entre lesdits bords de sorte à induire une augmentation de densité soutenue dans ladite (lesdites) zone(s),
- un moyen (10, 11) pour amener la bande primaire (7) à se chevaucher en la disposant de manière sensiblement transversale à la direction longitudinale de la bande primaire (7) pour former une bande secondaire (13) comprenant un certain nombre de couches,
- un moyen (12) pour acheminer la bande de fibre minérale secondaire dans la direction longitudinale,
**caractérisé par**
- un moyen pour décélérer le mouvement longitudinal de la bande secondaire pour obtenir une bande tertiaire longitudinalement comprimée,
- un moyen pour traiter ou durcir l'agent de liaison dans ladite bande tertiaire,
- un moyen pour découper la bande tertiaire traitée ou durcie,
où le moyen pour comprimer la bande primaire (7) dans une zone s'étendant longitudinalement le long de l'un ou des deux bords de la bande primaire (7) est tel qu'il induit une augmentation de densité soutenue dans ladite zone.

9. Appareil selon la revendication 8, comprenant un moyen pour onduler la bande de fibre minérale secondaire pour obtenir une bande de fibre minérale tertiaire comprenant des ondulations s'étendant dans la direction transversale de la bande tertiaire et ayant chacune un ensemble de pics d'ondulation s'étendant dans des directions opposées les uns par rapport aux autres et perpendiculairement à un plan de séparation s'étendant dans la direction longitudinale et la direction transversale au centre de la bande tertiaire.

10. Appareil selon la revendication 8 ou 9, comprenant un moyen pour diviser la bande tertiaire en des ondulations sensiblement carrées.

11. Appareil selon les revendications 8 à 10, comprenant un moyen pour séparer la bande tertiaire le long du plan de séparation pour obtenir deux ensembles de pics d'ondulation opposés et découper le produit à partir d'un ensemble de pics d'ondulation.
